# EUROPEAN PATENT APPLICATION

(11) **EP 3 885 199 A1**
(43) Date of publication of application: **29.09.2021**
(21) Application number: 18942186.0
(22) Date of filing: 07.12.2018
(51) Int. Cl.: B60R 16/023, B60L 50/50

(54) **ENERGY MANAGEMENT METHOD FOR ELECTRIC AUTOMOBILE, ENERGY STORAGE MANAGEMENT CONTROLLER AND ENERGY MANAGEMENT UNIT**

(71) Applicant: Hunan CRRC Times Electric Vehicle Co., Ltd, Zhuzhou, Hunan 412001 (CN)
(72) Inventor: WANG, Wei, Zhuzhou, Hunan 412001 (CN); YAN, Yanmao, Zhuzhou, Hunan 412001 (CN); WEN, Jianfeng, Zhuzhou, Hunan 412001 (CN); XIE, Yongbo, Zhuzhou, Hunan 412001 (CN); WANG, Wenming, Zhuzhou, Hunan 412001 (CN); YANG, Jiejun, Zhuzhou, Hunan 412001 (CN); HUANG, He, Zhuzhou, Hunan 412001 (CN)
(74) Representative: Laufhütte, Dieter
(86) International application number: PCT/CN2018/119730
(87) International publication number: WO 2020/113548

(57) **Abstract**

An energy management method for an electric automobile, an energy storage management controller and an energy management unit. The energy storage management controller first controls a battery to distribute high voltage to a high-voltage device, supply high voltage to a battery thermal management system, and supply power to a vehicle low-voltage power supply by means of a DCDC power supply, then detects the working states of the battery, the high-voltage device, and the battery thermal management system, sends a control instruction according to the working states to control power-on/off of the high-voltage device, and manages charging/discharging of the battery. Therefore, the energy storage management controller can realize high-voltage management of the electric automobile separately.

## Description

### FIELD

The present disclosure relates to the technical field of management and control of a battery of an electric vehicle, and in particular to an energy management method for an electric vehicle, an energy storage management controller, and an energy management unit.

### BACKGROUND

High-voltage management for an electric vehicle is management of high-voltage power-on/off of a driving system, an APU (auxiliary power unit), a steering system, a braking system, an electric heating system, an electric air conditioning system and the like of the vehicle. High-voltage management plays a vital role in high-voltage safety of the vehicle.

Currently, in the field of electric vehicles, a BMS (battery manage system) is generally provided by battery manufacturers, and is mainly for monitoring, evaluation, protection, and balance monitoring on the battery side. That is, the BMS only implements high-voltage management for charging and some auxiliary systems, and unnecessarily has complex processing functions. In addition, battery manufacturers cannot develop complex functions for the BMS currently. Therefore, high-voltage management for other systems is generally implemented by a VCU (vehicle control unit).

The above-mentioned decentralized management implemented by the BMS and the VCU results in high complexity and difficulty in high-voltage management, and therefore is required be optimized.

### SUMMARY

In view of this, an energy management method for an electric vehicle, an energy storage management controller, and an energy management unit are provided according to embodiments of the present disclosure, to solve the problem of high complexity and difficulty in high-voltage management due to the decentralized management in the conventional technology.

To achieve the above object, the present disclosure provides the following technical solutions.

An energy management method for an electric vehicle is provided. The method includes: controlling a battery to supply high-voltage power to a high-voltage device, to supply high-voltage power to a battery thermal management system, and to supply power to a vehicle low-voltage power supply via a DCDC power supply; and detecting operation states of the battery, the high-voltage device, and the battery thermal management system, and transmitting control instructions based on the operation states, to control the high-voltage device to be powered on or off, and to control charging and discharging of the battery.

Preferably, the detecting operation states of the battery, the high-voltage device, and the battery thermal management system, and transmitting control instructions based on the operation states, to control the high-voltage device to be powered on or off, and to control charging and discharging of the battery includes: acquiring, through communication, parameters characterizing the operation states; generating a power supply instruction and an on-off instruction based on the parameters; and transmitting, through communication, the power supply instruction to a component to which power is to be distributed in the high-voltage device, to supply power to the component; and transmitting, through communication, the on-off instruction to a switch in a power supply circuit for the high-voltage device to control the power supply circuit to be on or off so as to control the high-voltage device to be powered on or off, and to control charging and discharging of the battery.

Preferably, the generating a power supply instruction based on the parameters includes: acquiring a power limit for the component when being faulty based on a fault level in the parameters; calculating, through closed-loop control, target power of the component based on the power limit, an operation parameter of the component and a state parameter of the battery in the parameters, and a power feedback signal of the component; and generating the power supply instruction based on the target power.

Preferably, before the controlling a battery to supply high-voltage power to a high-voltage device, the method further includes: performing self-detection; and in a case thata fault is detected, reporting the fault.

An energy storage management controller is provided. The energy storage management controller is configured to perform the above energy management method for an electric vehicle.

An energy management unit is provided. The energy management unit is arranged in an electric vehicle, and the energy management unit includes a DCDC power supply, the above energy storage management controller, multiple power supply interfaces and multiple power supply circuits. An input end of the DCDC power supply is connected to a battery in the electric vehicle, and an output end of the DCDC power supply is connected to a vehicle low-voltage power supply in the electric vehicle. The energy storage management controller is configured to perform the above energy management method for an electric vehicle. The battery is connected to a high-voltage device via a power supply interface among of the multiple power supply interfaces and a power supply circuit among the multiple power supply circuits that correspond to the high-voltage device. Each of the multiple power supply circuits includes a switch, and the switch is configured to be turned on or off under control of the energy storage management controller.

Preferably, each of the multiple power supply circuits further includes a pre-charging circuit. The pre-charging circuit is configured to pre-charge a corresponding high-voltage device under control of the energy storage management controller.

Preferably, each of the multiple power supply circuits further includes a fuse. A type of the switch and a type of the fuse adapt to a high-voltage device corresponding to the power supply circuit.

Preferably, the converter is a single-motor controller or a dual-motor controller.

Preferably, the converter includes an APU auxiliary power unit.

Preferably, the DCDC power supply is connected to the battery via a live wire. The energy storage management controller is configured to control the DCDC power supply to wake up or sleep.

It can be seen from the above technical solutions that, in the energy management method for an electric vehicle according to the present disclosure, a battery is controlled to supply high-voltage power to a high-voltage device, to supply high-voltage power to a battery thermal management system, and to supply power to a vehicle low-voltage power supply via the DCDC power supply. Further, operation states of the battery, the high-voltage device, and the battery thermal management system are detected. A control instruction is transmitted based on the operation states, to control the high-voltage device to be powered on or off, and to control charging and discharging of the battery. Therefore, high-voltage management of the electric vehicle can be completely implemented based on the method according to the present disclosure, without decentralized management for the high-voltage-device performed by both the VCU and the BMS in the conventional technology, thereby avoiding the problem of high complexity and difficulty in high-voltage management due to the decentralized management in the conventional technology.

### BRIEF DESCRIPTION OF THE DRAWINGS

Figure 1a to Figure 2 are schematic diagrams each showing a structure and connection of an energy management unit according to an embodiment of the present disclosure;
Figure 3 is a flow chart showing an energy management method for an electric vehicle according to another embodiment of the present disclosure;
Figure 4 is a schematic diagram showing connection between an energy storage management controller and other system according to another embodiment of the present disclosure;
Figure 5 is a flow chart showing an energy management method for an electric vehicle according to another embodiment of the present disclosure, and
Figure 6 is a flow chart partly showing an energy management method for an electric vehicle according to another embodiment of the present disclosure.

### DETAILED DESCRIPTION OF EMBODIMENTS

In order to further understand the present disclosure, illustrative embodiments of the present disclosure are described below in conjunction with examples. However, it should be understood that these descriptions are only to further illustrate features and advantages of the present disclosure, and not to limit the claims of the present disclosure.

An energy management method for an electric vehicle is provided according to the present disclosure, to solve the problem of high complexity and difficulty in high-voltage management due to the decentralized management in the conventional technology.

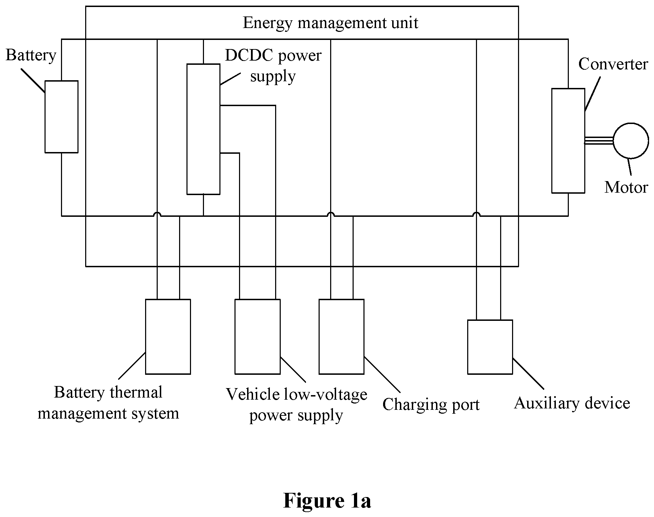

The energy management method for an electric vehicle is performed by an energy storage management controller in an energy management unit in the electric vehicle. As shown in Figure 1a to Figure 2, the energy management unit includes a DCDC power supply. An input end of the DCDC power supply is connected to a battery in the electric vehicle, and an output end of the DCDC power supply is connected to a vehicle low-voltage power supply in the electric vehicle.

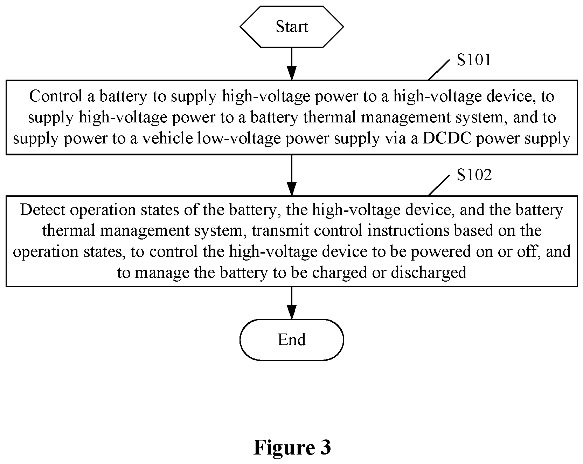

Referring to Figure 3, the energy management method for an electric vehicle includes the following steps S101 to S102.

In step S101, a battery is controlled to supply high-voltage power to a high-voltage device, to supply high-voltage power to a battery thermal management system, and to supply power to a vehicle low-voltage power supply via the DCDC power supply.

The high-voltage device is related to a chassis of the vehicle, including a converter, a charging port and an auxiliary device. The auxiliary device includes a steering device, a braking device, a heating device or the like. In practice, the auxiliary device further includes an electric defrosting device, an electric air conditioning device and the like.

The battery is controlled to supply power to the vehicle low-voltage power supply via the DCDC power supply, so that the vehicle low-voltage power supply is prevented from feeding. The vehicle low-voltage power supply may be a 24V low-voltage battery.

The battery is controlled to supply high-voltage power to the battery thermal management system, which facilitates heat dissipation of the battery and ensures that the battery operates at a suitable temperature.

In step S102, operation states of the battery, the high-voltage device, and the battery thermal management system are detected. A control instruction is transmitted based on the operation states, to control the high-voltage device to be powered on or off, and to control charging and discharging of the battery.

In practical applications, communication technology suitable for an application scenario, such as CAN communication, is adopted to detect the operation state of each of the battery, the high-voltage device, and the battery thermal management system and to transmit the control instruction. The communication technology is not limited herein, and any technology capable of implementing communication between the energy storage management controller and the above-mentioned devices is within the protection scope of the present disclosure.

The energy storage management controller implements high-voltage diagnosis and data statistics by communicating with the battery, the high-voltage device, and the battery thermal management system, to ensure high-voltage safety and subsequent system maintenance, thereby implementing complete high-voltage management for the electric vehicle.

Specifically, the energy storage management controller communicates with the battery to monitor the operation state of the battery. The energy storage management controller communicates with the battery thermal management system, so that the battery thermal management system protects and manages the battery. The energy storage management controller communicates with the high-voltage device, so as to control the converter, the charging port, the steering system, the braking system, the heating system or the like to be powered on or off. Therefore, the energy storage management controller can implement various high-voltage management for the charging system, the driving system and the auxiliary system.

With the energy management method for an electric vehicle according to the embodiment, high-voltage management of the electric vehicle can be completely implemented based on the above principle, without the decentralized management for the high-voltage-device performed by both the VCU and the BMS in the conventional technology, thereby avoiding the problem of high complexity and difficulty in high-voltage management due to the decentralized management. In addition, the energy storage management controller not only performs functions originally performed by the BMS but also performs high-voltage management originally performed by the VCU, so that software development for high-voltage management in the VCU is reduced in actual applications, and cost of the software development of the VCU is reduced.

The high-voltage safety of the electric vehicle is also affected by power distribution in the electric vehicle. The power distribution refers to allocation of target power to a component that actively discharges and generates power. The component that actively discharges and generates power is a component to which power is to be distributed. The device that actively discharges and generates power includes an auxiliary power supply system, an APU system, a charging system and a driving system. In the conventional technology, both the BMS and the VCU perform power distribution, which increases development cost and material cost.

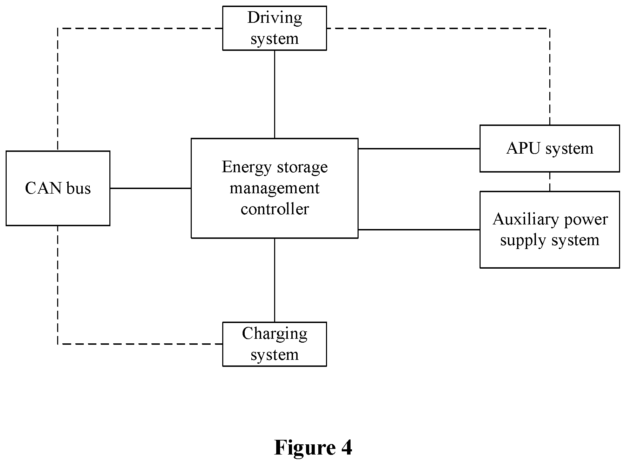

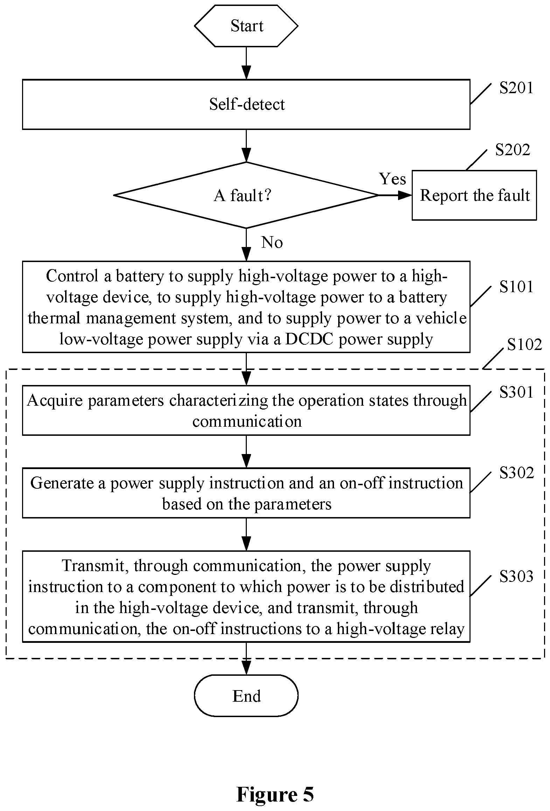

In view of this, an energy management method for an electric vehicle is provided according to another embodiment of the present disclosure. An energy storage management controller performing this method is shown in Figure 4, and is connected to the auxiliary power supply system, the APU system, the charging system, and the driving system. Moreover, based on the above embodiments, as shown in Figure 5, before step S101, the energy management method for an electric vehicle further includes the following steps S201 to S202.

In step S201, self-detection is performed.

After being powered on, the energy storage management controller performs self-detection. In a case that a fault is detected, step S202 is performed. In a case that no fault is detected, step S101 is performed.

In step S202, the fault is reported.

Moreover, step S102 includes the following steps S301 to S303.

In step S301, parameters characterizing the operation states are acquired through communication.

In step S302, a power supply instruction and an on-off instruction are generated based on the parameters.

In step S303, the power supply instruction is transmitted, through communication, to a component to which power is to be distributed in the high-voltage device, to supply power to the component. The on-off instruction is transmitted, through communication, to a switch in a power supply circuit of the high-voltage device, to control the power supply circuit of the high-voltage device to be on or off, so as to control the high-voltage device to be powered on or off, and to control charging and discharging of the battery.

Preferably, as shown in Figure 1a to Figure 2, the energy management unit includes multiple power supply interfaces and multiple power supply circuits, so that the battery is connected to a high-voltage device through a power supply interface and a power supply circuit that correspond to the high-voltage device. In addition, the power supply circuit includes a switch, such as a high-voltage relay. Therefore, the power supply circuit corresponding to the high-voltage device is switched on or off by turning the switch to be on or off in response to a corresponding on-off instruction. In practical applications, a power supply circuit for electric defrosting, a power supply circuit for electric heating and a power supply circuit for a charging port each include a switch.

The power supply circuit further includes a fuse to protect the high-voltage device corresponding to the power supply circuit.

In practical applications, a type of the switch and a type of the fuse depend on specific application environment, as long as the switch and the fuse adapt to the high-voltage device connected to the switch and the fuse.

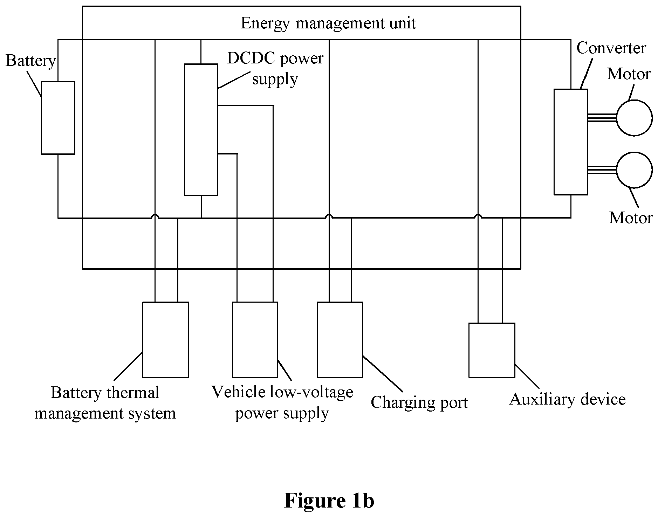

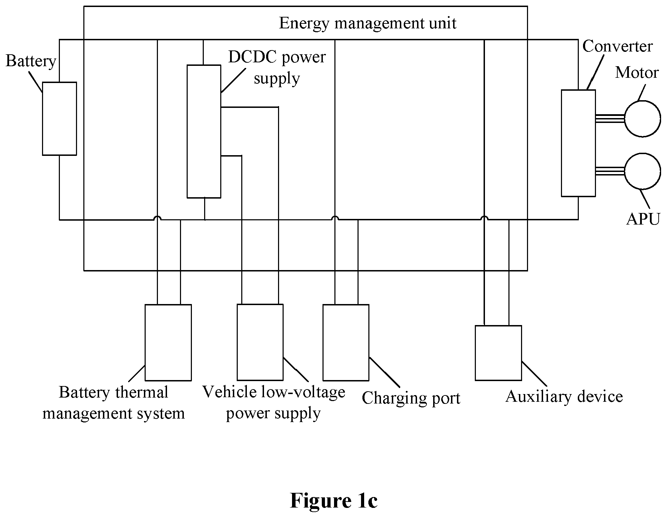

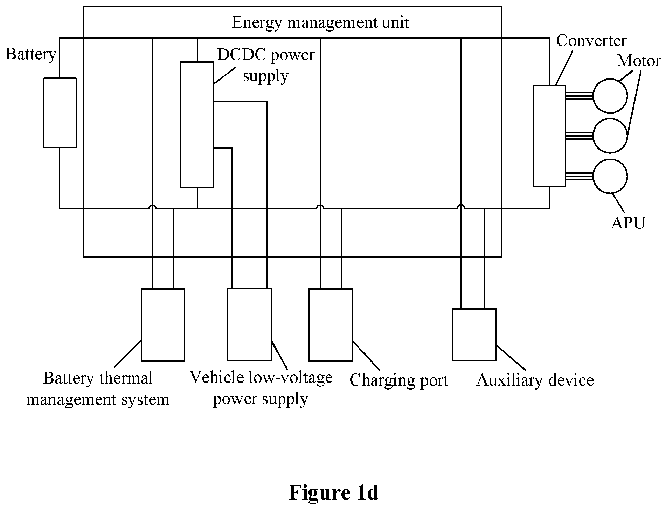

In addition, the converter also depends on specific application scenarios. For example, in case of a battery electric vehicle driven by a single motor, the converter is a single-motor controller (as shown in Figure 1a). In case of a battery electric vehicle driven by two motors, the converter is a dual-motor controller (as shown in Figure 1b). In case of a plug-in hybrid electric vehicle driven by a single motor, the converter is a dual-motor controller plus an APU (as shown in Figure 1c). In case of a plug-in hybrid electric vehicle driven by two motors, the converter is a dual-motor controller plus an APU (as shown in Figure 1d). The setting of the converter is not limited thereto, and any changes depending on actual conditions are within the protection scope of the present disclosure.

In practical applications, enough power supply interfaces are provided, and appropriate converters or switches and fuses of appropriate types are provided depending on actual situations, to adapt to electric vehicles of various configurations and models. For example, the energy management unit can meet requirements for high-voltage power supply of vehicles with various configurations and various models such as a water-cooled battery vehicle, a natural cooling battery vehicle, a bus ranging from 6m to 12m, a low-speed battery electric vehicle, and a logistics vehicle.

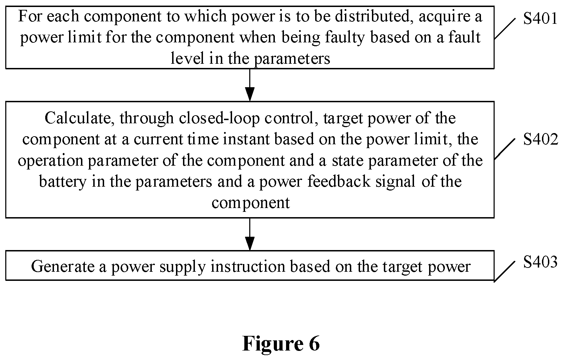

In addition, preferably, step S302 of generating a power supply instruction and an on-off instruction based on the parameters includes the following steps S401 to S403, as shown in Figure 6.

In step S401, a power limit of a component when being faulty is acquired based on a fault level in the parameters.

In practical applications, fault levels of components may be uniformly defined. For example, a third-level fault is defined as a most serious fault, and corresponds to a power limit of zero. In this case, the high-voltage power is required to be cut off. A second-level fault corresponds to a power limit of zero. A first-level fault corresponds to a power limit of 50%.

In step S402, for each component to which power is to be distributed, through closed-loop control, target power of the component at a current time instant is calculated based on the power limit, an operation parameter of the component and a state parameter of the battery in the parameters, and a power feedback signal of the component.

The power feedback signal of the component in calculation corresponding to the current time instant is obtained through communication at a previous time instant, thereby implementing closed-loop control on the power of the component.

In step S403, for each target power, a power supply instruction is generated based on the target power.

In response to a corresponding power supply instruction through communication, the component to which power is to be distributed operates based on the target power included in the power supply instruction. Power information of the component acquired and transmitted, as a power feedback signal of the component for closed-loop control at a next time instant. Updated fault level information of the component is acquired, as a parameter for acquiring an updated power limit based on the fault level.

In practical applications, as long as required parameters and a communication protocol are determined, requirements for power distribution to components with various power levels can be met, thereby realizing generalization and platformization of power distribution.

That is, based on the above embodiment, in this embodiment, the BMS implements the power distribution originally implemented by the VCU, thereby reducing cost of software development of the VCU. In addition, a standard high-voltage management framework is provided to adapt to various electric vehicles, so that the high-voltage management of various electric vehicles is universal. Therefore, it is unnecessary to perform high-voltage power distribution depending on various vehicles, reducing development period and cost.

Other details in this embodiment are the same as the above embodiment, and are not repeated here.

An energy storage management controller is further provided according to another embodiment of the present disclosure. The energy storage management controller is configured to perform the energy management method for an electric vehicle according to the foregoing embodiments. Details of the method and the connection between the energy storage management controller and other components in the electric vehicle can refer to the above embodiments, and are not repeated here.

The energy storage management controller includes at least a processor, a memory, and a communication module. The number of each of various components in the energy storage management controller is not limited herein, as long as the various components can cooperate with each other and implement the above energy management method for an electric vehicle. Any solution for implementing the energy management method for an electric vehicle is within the protection scope of the present disclosure.

An energy management unit is provided according to another embodiment of the present disclosure. As shown in Figure 1a to Figure 2, the energy management unit includes a DCDC power supply and an energy storage management controller.

An input end of the DCDC power supply is connected to a battery in the electric vehicle. An output end of the DCDC power supply is connected to a vehicle low-voltage power supply in the electric vehicle.

The power storage controller, as illustrated in the above embodiment, is configured to perform the energy management method for an electric vehicle according to any one of the above embodiments. The steps and principles of the energy management method for an electric vehicle are the same as those in the above embodiments, and are not repeated here.

The energy management unit further includes multiple power supply interfaces and multiple power supply circuits, so that the battery is connected to a high-voltage device via a power supply interface among the multiple power supply interfaces and a power supply circuit among multiple power supply circuits that correspond to the high-voltage device.

The high-voltage device may include a converter, a charging port, and an auxiliary system.

The power supply circuit includes a switch (not shown in the drawings). The energy storage management controller controls the switch to be turned on or off.

Other components included in the energy management unit and connection between the energy management unit and other components can refer to the above embodiments, and are not repeated here.

It should be noted that, decentralized management performed by the VCU and the BMS on the high-voltage devices according to the conventional technology may increase a failure rate of the switch, and failures such as high-voltage power failing to be supplied to the vehicle and faulty power steering frequently occur, resulting in traffic accidents.

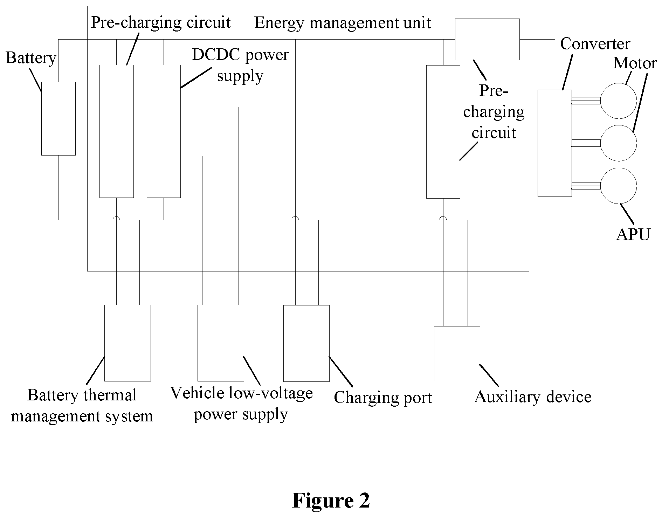

Therefore, based on the above embodiments, in the energy management unit according to this embodiment, for a component to which power is to be distributed such as a battery thermal management system, a safety auxiliary device and a converter, a power supply circuit for the component includes a pre-charging circuit, as shown in Figure 2. The energy storage management controller controls the pre-charging circuit to pre-charge the component.

In this way, high-voltage control on such high-voltage device is implemented by switches, that is, a main relay (the above high-voltage relay) and a pre-charging relay in the power supply circuit for the high-voltage device. High-voltage devices are independent of each other due to their respective pre-charging circuits, so that a faulty high-voltage device is prevented from affecting another high-voltage device, thereby improving driving safety of the vehicle compared with the conventional technology.

Preferably, the DCDC power supply is connected to the battery via a live wire. The energy storage management controller controls the DCDC power supply to wake up and sleep.

The DCDC power supply is a live power supply, so that a volume of the vehicle low-voltage power supply (that is, a 24V low-voltage battery) according to the conventional technology is reduced, and even the 24V low-voltage battery according to the conventional technology is omitted. In this way, a battery pack supplies both high-voltage power and low-voltage power to the vehicle, thereby reducing cost of the 24V low-voltage battery of the vehicle.

Other structures and principles are the same as the above embodiments, and are not repeated here.

A specific implementation of a circuit board is provided according to this embodiment. However, the circuit board is not limited thereto in practical applications. Any solution for detecting acupuncture points by dual probes and leading to a small size and convenient operation is within the protection scope of the present disclosure.

Based on the above description of the disclosed embodiments, those skilled in the art can implement or carry out the present disclosure. It is apparent for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. An energy management method for an electric vehicle, comprising:
controlling a battery to supply high-voltage power to a high-voltage device, to supply high-voltage power to a battery thermal management system, and to supply power to a vehicle low-voltage power supply via a DCDC power supply; and
detecting operation states of the battery, the high-voltage device, and the battery thermal management system, and transmitting control instructions based on the operation states, to control the high-voltage device to be powered on or off, and to control charging and discharging of the battery.

2. The energy management method for an electric vehicle according to claim 1, wherein the detecting operation states of the battery, the high-voltage device, and the battery thermal management system, and transmitting control instructions based on the operation states, to control the high-voltage device to be powered on or off, and to control charging and discharging of the battery comprises:
acquiring, through communication, parameters characterizing the operation states;
generating a power supply instruction and an on-off instruction based on the parameters; and
transmitting, through communication, the power supply instruction to a component to which power is to be distributed in the high-voltage device, to supply power to the component; and transmitting, through communication, the on-off instruction to a switch in a power supply circuit for the high-voltage device to control the power supply circuit to be on or off, so as to control the high-voltage device to be powered on or off, and to control charging and discharging of the battery.

3. The energy management method for an electric vehicle according to claim 2, wherein the generating a power supply instruction based on the parameters comprises:
acquiring a power limit for the component when being faulty based on a fault level in the parameters;
calculating, through closed-loop control, target power of the component based on the power limit, an operation parameter of the component and a state parameter of the battery in the parameters, and a power feedback signal of the component; and
generating the power supply instruction based on the target power.

4. The energy management method for an electric vehicle according to any one of claims 1 to 3, wherein before the controlling a battery to supply high-voltage power to a high-voltage device, the method further comprises:
performing self-detection; and
in a case that a fault is detected, reporting the fault.

5. An energy storage management controller, configured to perform the energy management method for an electric vehicle according to any one of claims 1 to 4.

6. An energy management unit, wherein the energy management unit is arranged in an electric vehicle, and the energy management unit comprises:
a DCDC power supply, wherein an input end of the DCDC power supply is connected to a battery in the electric vehicle, and an output end of the DCDC power supply is connected to a vehicle low-voltage power supply in the electric vehicle;
the energy storage management controller according to claim 5; and
a plurality of power supply interfaces and a plurality of power supply circuits, wherein
the battery is connected to a high-voltage device via a power supply interface among the plurality of power supply interfaces and a power supply circuit among the plurality of power supply circuits that correspond to the high-voltage device; and
each of the plurality of power supply circuits comprises a switch, wherein the switch is configured to be turned on or off under control of the energy storage management controller.

7. The energy management unit according to claim 6, wherein each of the plurality of power supply circuits further comprises a pre-charging circuit, wherein the pre-charging circuit is configured to pre-charge a corresponding high-voltage device under control of the energy storage management controller.

8. The energy management unit according to claim 6, wherein each of the plurality of power supply circuits further comprises a fuse, wherein a type of the switch and a type of the fuse adapt to a high-voltage device corresponding to the power supply circuit.

9. The energy management unit according to claim 6, wherein a converter a single-motor controller or a dual-motor controller.

10. The energy management unit according to claim 9, wherein the converter comprises an APU auxiliary power unit.

11. The energy management unit according to claim 6, wherein
the DCDC power supply is connected to the battery via a live wire; and
the energy storage management controller is configured to control the DCDC power supply to wake up or sleep.
